(19) **Europäisches Patentamt**

**European Patent Office**

**Office européen des brevets**

(11) Publication number: **0 467 585 B1**

# EUROPEAN PATENT SPECIFICATION

(45) Date of publication of patent specification: **01.02.95**  (51) Int. Cl.⁶: **B60C 9/22**

(21) Application number: **91306266.7**

(22) Date of filing: **10.07.91**

(54) Radial tyre for a motorcycle.

(30) Priority: **11.07.90 JP 184822/90**

(43) Date of publication of application:
**22.01.92 Bulletin 92/04**

(45) Publication of the grant of the patent:
**01.02.95 Bulletin 95/05**

(84) Designated Contracting States:
**DE FR GB**

(56) References cited:
**EP-A- 0 294 153**
**EP-A- 0 335 588**
**DE-A- 3 242 323**
**DE-A- 3 535 188**
**GB-A- 2 003 525**

(73) Proprietor: **SUMITOMO RUBBER INDUSTRIES
LIMITED**
**1-1 Tsutsuicho 1-chome**
**Chuo-ku**
**Kobe-shi**
**Hyogo-ken (JP)**

(72) Inventor: **Nakasaki, Eiji**
**629 Kimura,**
**Kakogawa-cho**
**Kakogawa-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

**Description**

The present invention relates to a radial tyre for motorcycle which improves the steering stability and durability in high speed travelling.

As the traffic network of expressways is spreading demand for high speed travelling is also increasing in motorcycles.

Radial tyres for such motorcycles have been conventionally designed and manufactured on the same basis as radial tyres for four-wheel vehicles. Therefore, they do not really provide the turning and straight running performance characteristics required by two-wheel vehicles, and are poor in steering stability especially in high speed travelling.

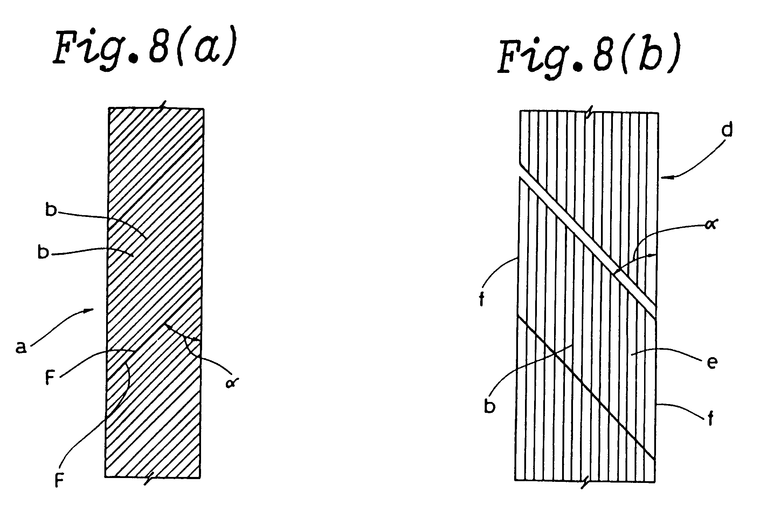

The reason is that hitherto, the belt layer (a) reinforcing the tread has been the same as in a four-wheel vehicle, disposed so that the cords (b) are inclined at an angle ($\alpha$) of 15 to 30 deg. to the tyre equator as shown in Fig. 8 (a). Also, it is proven to have as shown in Fig.8(b), a belt layer formed by having cords (b) arranged in the longitudinal direction of the belt strip (d) joining end to end parallogrammic-shaped sheets (e) which are formed by cutting sheet to give an inclination angle ($\alpha$) of the cords (b) in the sheets (e) to give a resultant belt strip (d).

In such a belt layer (a), since the junctions (f) run obliquely to the rotating direction of the tyre, steering is unstable, and straight running is impeded. Also when turning steering is inferior, and these effects are amplified in particular when running at high speed.

To solve in part these problems, for example, it is proposed in Japanese Laid-open Utility Model No. 58160805 to form a belt layer without having seams in the direction intersecting the travelling direction of the tyre by spirally wrapping a belt cord in the equatorial direction of the tyre.

In this proposal, since the belt cord itself is directly wound around on carcass having a small radius, unravelling may occur at the start or end of winding of the belt cord, and the durability is inferior. In addition, it is necessary to use a belt cord of high elasticity, such as rayon or aromatic polyamide with a modulus of elasticity of 600 kgf/mm$^2$ or more in order to wind securely.

On the other hand, in a tyre for a four-wheel vehicle, it is proposed to enhance steering stability performance and high speed durability, by forming a belt layer composed of plural belt plies made of high elasticity cords on the carcass, and a band layer spirally winding band cords on the belt layer. If, however, this structure is directly applied to a tyre for a motorcycle, the rigidity of the tread part becomes too high, and the camber stiffness is lowered. As a result, the turning stability in high speed travelling is lowered, and waving or shake of the machine occurs. In tyres for motorcycles, therefore, it is necessary to lower the rigidity of the tread part to the level of a bias tyre and to raise the camber stiffness, thereby enhancing the straight running stability and turning stability at high speed.

A motorcycle tyre having features according to the preamble of claim 1 is known for example from Patent Publication EP-A-0294153. Also a tyre have a band layer of at least one hybrid cord of high and low elastic moduli filaments twisted together and wound spirally and continuously at a small angle to the circumferential direction of the tyre is known from Patent Publication EP-A-0335588.

It is hence the object of the invention to provide a radial tyre for a motorcycle capable of enhancing the steering stability and durability in high speed travelling, without lowering ride comfort.

According to the present invention a radial tyre for a motorcycle comprises a carcass having a main body extending from a tread through sidewalls to a bead core in each of two beads, and two turned-up parts each turned around the bead core from the inside to the outside of the tyre and extending outwardly in the tyre radial direction to the tread; a band layer composed of at least one band ply disposed outside in the tyre radial direction of the carcass and in the tread; two bead apexes each extending from a bead core to the tread and terminated between the main body part and the band layer and said tread extending in an arc from the tyre equator outwardly in the tyre axial direction so as to define a tread width which is the tyre maximum width wherein the carcass is composed of at least one carcass ply of carcass cords made of organic fibres inclined at an angle of 85 to 90 deg to the tyre equator characterised in that the band layer comprises a spirally wound narrow strip wound at a small angle of 0 to 5 deg to the tyre equator, the strip being a narrow band-shaped ply strip having at least one band cord of twisted high elasticity filament and low elasticity filament in a topping rubber and the distance in the tyre axial direction of the terminated end of the bead apex from the tyre equator is in a range of 0.125 to 0.375 times the tread width.

As mentioned above, the cords of the band layer disposed on the carcass and having carcass cords arranged at an angle of 85 to 90 deg to the tyre equator are wound around the tyre at a small inclination of 5 degrees or less to the tyre equator. Therefore, unlike the conventional radial tyre, the truss structure of the cords is of high rigidity, and the rigidity of the tread part is lowered, so that the resultant camber stiffness may be at the level of a bias tyre.

Also, since the band layer is formed by winding the band-shaped ply strip which comprises band cords in topping rubber, that are no seams or joints with inclinations to the equator as in the conventional belt layer shown in Fig. 8 (a), and the steering stability in straight running and turning may be improved. In addition, since a bandshaped ply strip is used, unravelling of the cord end is effectively prevented. Besides, the band cords may be formed by twisting together the high elasticity filaments and low elasticity filaments. By twisting such filaments, the band cords are lowered in elasticity as compared with belt cord made of high elasticity filaments only. As a result, when vulcanising and shaping the green or uncured tyre in the vulcanising mould, the outer circumferential surface may be pressed to the inner wall of the vulcanising mould by the internal pressure of the crude tyre, because of the allowed elongation of the hybrid band cord, so that a high expansion rate is achieved. Therefore, in spite of use of band cord spirally wound and including high elasticity filaments, the completed tyre may be stabilised in shape and the size so as to improve the precision, and the high speed running performance may be enhanced.

Still more, the high elasticity filament prevents the phenomenon of growth of the tread due to centrifugal force when running at high speed, that is, the so-called lifting phenomenon, and suppresses the occurrence of vibration of the machine, while preventing peeling of the band layer, so that the durability in high speed travelling may be enhanced.

An embodiment of the present invention will now be described by way of example, referring to the attached drawings, in which:

Fig. 1 is a sectional view showing an embodiment of the invention;

Fig. 2 is a perspective view showing an example of a hoop-shaped ply;

Fig. 3 (a) is a front view showing an example of compound belt cord;

Fig. 3 (b) is a front view showing its elongated state;

Fig. 4 (a) is a front view schematically showing the initial state of high elasticity filament;

Fig. 4 (b) is a front view schematically showing the elongated state of high elasticity filament;

Fib. 5 is a diagram showing an example elongation curve of cord;

Fig. 6 is a sectional view showing winding of a hoop-shaped ply;

Fig. 7 is a sectional view showing a belt layer;

Fig. 8 (a) is a plan view showing a prior art constructional feature; and

Fig. 8 (b) is a plan view showing another prior art constructional feature.

A radial tyre for a motorcycle 1 comprises a tread 2, two sidewalls 3 each extending inwardly in the tyre radial direction from both ends of the tread 2 and two beads 4 one located at the inward end of each sidewall 3 and reinforced by a bead core 5. The radial tyre 1 also comprises a carcass 6 extending between the two bead cores 5, a band layer 7 disposed in the tread 2 outside in the tyre radial direction of the carcass 6 and two bead apexes 9 each extending in the tyre radial direction from the bead core 5 to the tread 2.

The tread 2 extends in a single arc from the tyre equator C to the outside in the tyre axial direction, and the tread width WT which is the distance in the tyre axial direction between the outer ends E1,E2 of the tread 2 is the tyre maximum width W. The radius of curvature R of the outersurface of the tread 2 is, in this embodiment in the range of 0.54 to 0.85 times the tread width WT.

The carcass 5 has a main body 6a extending from the tread 2 through the sidewalls 3 to the bead cores 4, and two turned-up portions 6b each winding around its bead core 5 from the inside to the outside of the tyre at the end of the main body 6a and extending radially outwardly to the tread 2. The carcass 6, in this embodiment, is composed of one carcass ply of carcass cords inclined at an angle of 85 to 90 deg. to the tyre equator C, and the carcass cord is made of nylon, rayon, polyester, aromatic polyamide or other organic fibre cord.

In the turned-up part 6b of the carcass 6, the turned-up height Ht, which is the distance in the tyre radial direction from the bead base 15 to the upper edge of the turned-up part 6b, is not less than the tread edge height Hs, which is the distance in the tyre radial direction from the bead base 15 to the tread edges E1, E2.

If the turn-up height Ht is less than the tread edge height Hs, the bending stress acting on the bead 4 and sidewall 3 is not only absorbed fully, but also the rigidity of the tyre especially the bead 4 is insufficient, and the durability is lowered.

The band layer 7 is a one-ply structure wherein a long and narrow band-shaped ply strip 10 is wound spirally on the outside of the carcass 6. The band layer 7 has a width WB in the tyre axial direction which is in the range of 0.85 to 0.95 times the tread width WT. If less than 0.85 times, the rigidity is too small in the shoulder region near the tread edges E1, E2, so as to decrease the turning performance. To the contrary, if exceeding 0.95 times, separation at the band edge is inclined to result which decreases tyre durability.

3

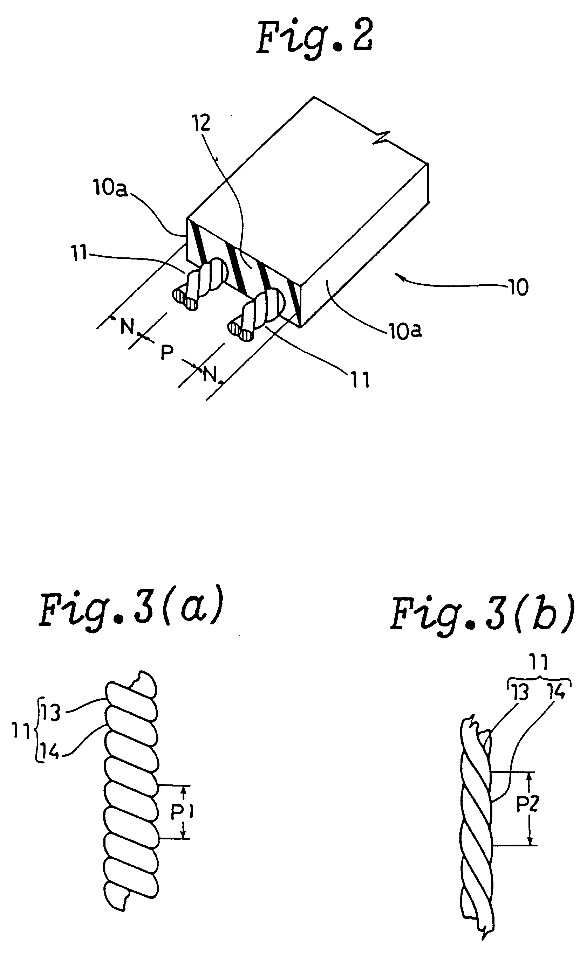

Especially in this embodiment, the outer end of the band layer 7 overlaps the outer surface of the upper end of the turned-up part 6b, and the overlap width L of the overlap portion 16 along the band layer 7 is set to be 2 to 20 mm. The band-shaped ply strip 10 has one or more, two in this embodiment, hybrid band cords 11 arranged parallel to each other and buried in topping rubber 12 as shown in Fig. 2. The hybrid band cord 11 is formed by twisting together a high elasticity filament 13 and a low elasticity filament 14.

The high elasticity filament 13 is composed of organic fibre which has an elastic modulus of 200 g/d or more, such as aromatic polyamide fibre, aromatic polyester fibre or the like. Its thickness is a relatively small diameter of about 1000 to 3000 denier.

The low elasticity filament 14 is composed of organic fibre which has an elastic modulus of 100 g/d or less, such as nylon fibre, polyester fibre, vinyl fibre or the like.

Such a high elasticity filament 13, whether in a singularity or in a plurality, is pre-twisted, and is twisted together in reverse directions with one or more low elasticity filaments 14 pre-twisted in the same direction, thereby forming the hybrid band cord 11. Meanwhile, when using a plurality of high elasticity filaments 13 and low elasticity filaments 14, each filament may be pre-twisted, or the plurality may be pre-twisted together. The hybrid band cord 11 may be formed, as shown in Fig. 3 (a), by twisting together each one of the high elasticity filaments 13 and low elasticity filaments 14, or twisting one of either filament type and a plurality of the other.

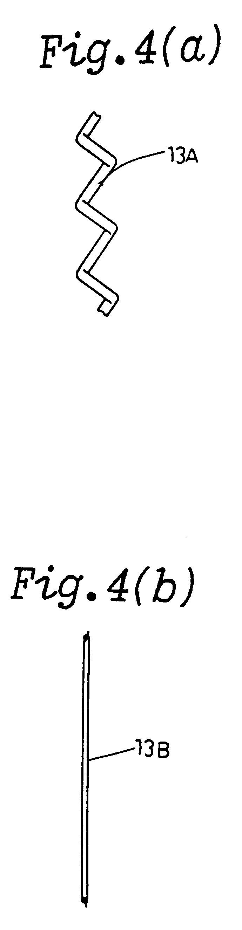

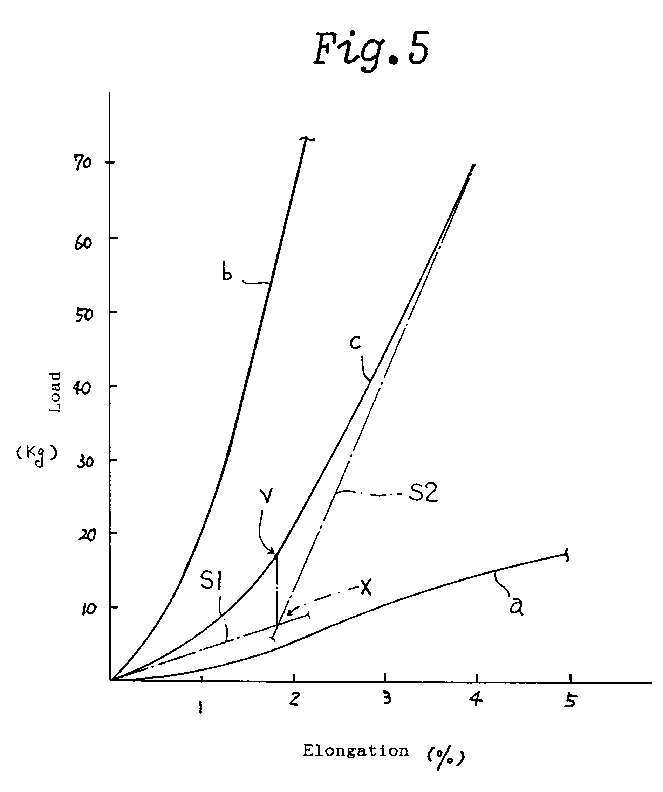

When a tensile force is applied to the hybrid band cord 11, as shown in Fig. 3 (b), it is elongated while returning the twist. When stretched, the initial twisting pitch P1 of the hybrid band cord 11 is increased to pitch P2. This elongation is schematically shown in Fig. 4 (a), (b) with respect to the high elasticity filament 13, in which the high elasticity filament 13A in a coil form in the initial state becomes a straight filament 13B due to specified elongation. In this state, therefore, the high elasticity filament 13 exhibits its own intrinsic high elasticity. Thus, by preliminarily twisting the high elasticity filament 13 spirally, it is evident to produce the low elasticity region of a relatively large elongation from the spiral state in Fig. 4 (a) till the straight state in Fig. 4 (b), and the high elasticity region of small elongation when a further load is added to the state in Fig. 4 (b), and the straight state shown in Fig. 4 (b) forms the flex point V in the elongation-stress curve of Fig. 5.

In the hybrid band cord 11, the flex point V is set to be less than 3% of the elongation, preferably, 1.5 to 2.5%. The hybrid band cord 11 is a twisted assembly of high elasticity filament 13 and low elasticity filament, and therefore as shown in Fig. 3 (b), the high elasticity filament 13 and low elasticity filaments 14 are twisted even when a load is applied, and the flex point V is not so obvious as compared with the schematic case in Fig. 4 (a) and (b). An example of a stress-elongation curve of the hybrid band cord 11 is shown in Fig. 5. In the diagram, curve (a) denotes an elongation curve of low elasticity filament 14 of nylon6.6 840d, and curve (b) is that of high elasticity filament 13 made of aromatic polyamide of 1000d. Curve (c) is the hybrid band cord 11 twisted from one high elasticity filament 13 and two low elasticity filaments 14. Curve (c) is located between curve (a) and curve (b), and the flex point V is found less than 3%. In the hybrid band cord 11, the flex point V is defined as the intersecting point of curve (c) and the perpendicular which passes through the cross point X of the tangent S1 contacting with the curve in the state of zero elongation and the tangent S2 drawn to curve (c) at the breakdown point.

The hybrid band cord 11 has a high elasticity region ranging from the flex point V to the breakdown point, and a low elasticity region ranging from the origin at zero elongation to the flex point V, and the ratio EH/EL of the elasticity in the high elasticity region EH to the elasticity in low elasticity region EH is in a range of 4 to 8. With such hybrid band cord 11, by properly selecting the thickness, quantity and elasticity of the high elasticity filaments, and thickness, quantity and elasticity of the low elasticity filaments, and adjusting the twisting conditions such as filament angle, a hybrid cord 11 may be provided with the above range as shown in Fig. 5. It may be also adjusted by the selection of the drawing treatment given to the hybrid band cord 11, high elasticity filament 13 and low elasticity filament 14.

The band-shaped ply strip 10 has a flat rectangular section, and the distance N from the side edge 10a to the centre of the band cord 11 located at the outermost position is set at 1/2 or less of the pitch P of the band cords 11, 11.

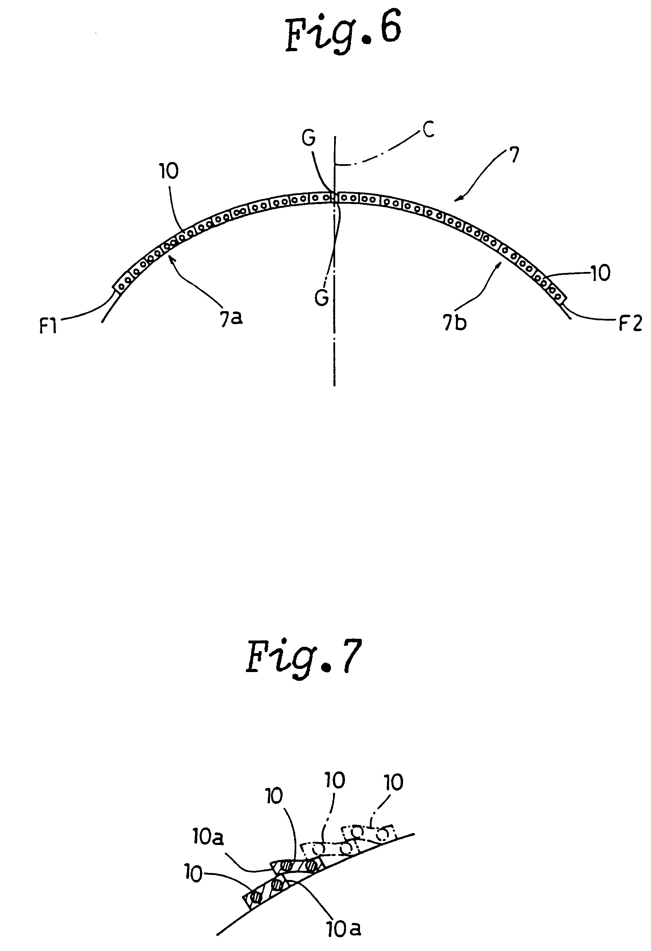

In this embodiment, the band ply is divided at the tyre equator C into left and right ply pieces 7a, 7b, as shown in Fig. 6. The ply piece 7a is formed by spirally winding the band-shaped ply strip 10, at a small angle of 5 deg. or less to the tyre equator C, from the starting point F1 which is positioned on the carcass 6 near one tread end E1 till the end point G which is near the tyre equator C. In the invention, when winding the band-shaped ply strip 10, as shown in Fig. 7, the mutually adjacent side edges 10a, 10a are closely overlapped with each other. Therefore, loosening at the starting point F1 of the band-shaped ply strip 10 is prevented, thereby avoiding separation in the edge of the band layer 7 where large forces act in use of the tyre.

On the other hand, the ply piece 7b is formed by winding the band-shaped ply strip 10 from the starting point F2 which is positioned on the carcass 6 near the other tread end E2 till the end point G which is near the tyre equator C. Meanwhile, the other ply piece 7b inclines the ply strip 10 at the same angle as the ply piece 7a in a reverse direction of the ply piece 7a with respect to the tyre equator C, thereby winding symmetrically about the tyre equator C. As mentioned above, because the ply strips 10 are wound from the both outer edges F1, F2 with a small diameter of the band layer 7, the winding start point is not only firmly fixed, but also the winding is done firmly. And the winding end point is not located at the outer edge of the band layer, so that loosening of the band-shaped ply strip 10 initiating from the winding end point may be prevented.

Incidentally, the ply pieces 7a, 7b may be aligned in the same winding direction to each other, and the band layer 7 may be formed by winding one ply strip 10 starting from one outer edge of the belt layer 7 and ending with the other outer edge.

Since the elongation of the band cord 11 at the flex point V is less than 3% as mentioned above, in fabrication of tyre, when the green tyre is set in the vulcanising mould and inflated with internal pressure, the band layer 7 bulges out due to elongation of the band cord 11 and presses the outer circumference to the inner wall of the mould, so that the groove pattern formed on the mould can be marked in the tread part 2. Meanwhile, bulging by inflation of the crude tyre is effected by the elongation of the band cord 11 in the low elasticity region. For this purpose, the flex point V is set less than 3%. The necessary elongation of the band cord 11 in the mould is desired to be set near the elongation at the flex point V. As a result, fretting of the formed tyre or bulging of the tyre due to centrifugal force acting in high speed rotation may be suppressed by the high elasticity filament. For this purpose, the ratio EH/EL of the elasticity in high elasticity region EH to the elasticity in low elasticity region EL is defined within 4 to 8. If less than 4, the suppressing effect is poor, and if exceeding 8, is not required for the balance of the tyre.

By defining the EH/EL within 4 to 8, bulging of the tyre due to centrifugal force may be suppressed, and therefore vibration in high speed travelling may be effectively reduced, peeling of the band layer 7 is prevented, so that the high speed durability may be further enhanced.

The bead apex 9 extends from the bead core 5 between the main body part 6a and turned-up parts 6b of the carcass 6 and is terminated in the tread part 2 between the main body part 6a and the band layer 7. The bead apex 9 is made of a relatively soft rubber with JIS A hardness of 50 to 65 degrees, in this embodiment, the distance J in the tyre axial direction of the terminal upper end K of the bead apex 9 from the tyre equator C is in a range of 0.125 times or more of the tread width WT and 0.375 times or less.

If the rubber hardness is less than 50, the rigidity of the bead 4 and sidewall 3 is insufficient, and the tenaciousness is decreased so as to make inferior the steering stability in straight running or turning. If made greater than 65 degrees, the rigidity is too high, and the steering performance becomes poor.

If the distance J exceeding 0.375 times the tread width WT, the rigidity at the tread shoulder is imperfect, and weaving may be easily generated in high speed travelling, or when turning with a camber angle, the cornering power is insufficient, and the grip tends to decline. If the distance J is less than 0.125 times the tread width WT, the rigidity of the tread crown middle part becomes high, and the camber stiffness is lowered, so that the turning performance is sacrificed.

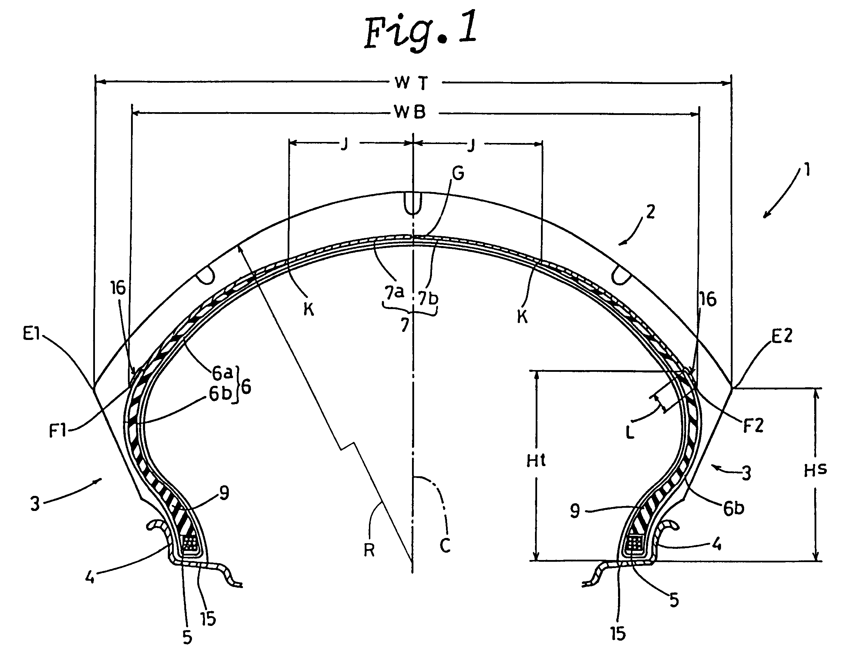

As examples of the invention tyres of size 170/60VR17, were made as shown in Fig. 1 and specified as in Table 2 (a),(b). These example tyres 1 to 10 were then tested. By way of comparison, tyres fabricated out of the composition of this specification (Comparisons 1 to 4) were similarly tested.

The test conditions were as follows.

1) Steering stability, comfort of ride, and vibration initiating speed

Test tyres were mounted on the rear wheel of a motorcycle, and the motorcycle was driven on a circuit road at 250 to 280 km/hr, and the performance was evaluated by the feel of the test rider, and is indicated by the index taking Comparison 1 as 100. The larger the figure, the greater is the performance.

In the test, the front wheel was provided, both in Examples and Comparisons, with a tyre of size 120/70R17, with the belt layer structured as shown in Fig. 8 (a), and specified as shown in Table 1.

2) High speed durability

Using a drum testing machine, the test tyre was inflated to its specified internal pressure and loaded to 80% of the specified maximum load. The test started at an initial speed of 220 km/hr and the speed was increased by 10 km/hr every 10 minutes to perform a high speed durability test of the step speed type until the tread failed when the speed was measured and expressed as an index with Comparison 1 taken as 100. The greater the numeral, the more excellent is the durability.

As a result of test, the Examples of the invention were found to be superior to the Comparisons of the old constructions.

3) The tyre was given three levels of camber angle of 5, 8 and 10 degrees, and the camber thrust at each camber angle was measured, and the camber stiffness was calculated, and the mean is compared by the index. The greater index means a superior result.

Table 1

| Item | Specification |
|---|---|
| Carcass | |
| Number of ply<br>Material of cord<br>cord size<br>cord angle (deg.) | 1<br>nylon<br>2/840<br>88 |
| Belt layer | |
| Number of ply<br>Material of cord<br>cord size<br>cord angle (deg.) | 2<br>Aromatic polyamide<br>2/1500<br>17 |

Table 2 (a)

| | embodiment 1 | embodiment 2 | embodiment 3 | embodiment 4 | embodiment 5 | embodiment 6 | embodiment 7 |
|---|---|---|---|---|---|---|---|
| **Carcass** | | | | | | | |
| Number of ply | 1 | 1 | 1 | 1 | 1 | 1 | 1 |
| Material of cord | nylon | nylon | nylon | nylon | nylon | nylon | nylon |
| Size of cord | 2/840d | 2/840d | 2/840d | 2/840d | 2/840d | 2/840d | 2/840d |
| Cord ends(per 5 cm) | 47 | 47 | 47 | 47 | 47 | 47 | 47 |
| Cord angle (deg.) | 90 | 90 | 90 | 90 | 90 | 90 | 90 |
| **Band layer** | | | | | | | |
| Composition of cord | hybrid (Fig.6) | hybrid (Fig.6) | hybrid(Fig.6) | hybrid (Fig.6) | hybrid (Fig.6) | hybrid (Fig.6) | hybrid (Fig.6) |
| High elasticity filament | | | | | | | |
| -Material | *1 | *1 | *1 | *1 | *1 | *1 | *1 |
| -Denier | 1500d | 1000d | 1000d | 1000d | 1000d | 1000d | 1500d |
| Low elasticity filament | | | | | | | |
| -Material | nylon | nylon | nylon | nylon | nylon | nylon | nylon |
| -Denier | 840d | 840d | 840d | 840d | 840d | 840d | 840d |
| Type of band ply | spiral | spiral | spiral | spiral | spiral | spiral | spiral |
| Cord angle | 0 | 0 | 0 | 0 | 0 | 0 | 5 |
| Band width WB (mm) | 150 | 168 | 160 | 160 | 160 | 160 | 160 |
| Ratio of band width to tread width WB/WT | 0.85 | 0.95 | 0.90 | 0.90 | 0.90 | 0.90 | 0.90 |
| Overlap width L (mm) | 5 | 20 | 15 | 5 | 15 | 3 | 15 |
| **Bead apex** | | | | | | | |
| Distance J (mm) | 22 | 66 | 44 | 44 | 44 | 44 | 18 |
| Ratio of distance to tread width J/WT | 0.125 | 0.375 | 0.25 | 0.25 | 0.25 | 0.25 | 0.10 |
| **Test results** | | | | | | | |
| Steering stability (index) | 120 | 120 | 110 | 110 | 120 | 120 | 110 |
| Vibration, ride comfort (index) | 120 | 120 | 120 | 120 | 120 | 120 | 120 |
| High speed durability (index) | 125 | 128 | 128 | 128 | 128 | 124 | 128 |
| Camber stiffness (index) | 92 | 98 | 96 | 96 | 96 | 96 | 90 |
| Vibration initiating speed (km/h) | None up to 240 | None up to 240 | None up to 240 | None up to 240 | None up to 240 | None up to 240 | None up to 240 |

*1.....Aromatic polyamide

T a b l e   2 (b)

| | embodiment 8 | embodiment 9 | embodiment 10 | Comparison 1 | Comparison 2 | Comparison 3 | Comparison 4 |
|---|---|---|---|---|---|---|---|
| **Carcass** | | | | | | | |
| Number of ply | 1 | 1 | 1 | 1 | 1 | 1 | 2 |
| Material of cord | nylon | nylon | nylon | nylon | nylon | nylon | nylon |
| Size of cord | 2/840d | 2/840d | 2/840d | 2/840d | 2/840d | 2/840d | 2/840d |
| Cord ends(per 5 cm) | 47 | 47 | 47 | 47 | 47 | 47 | 47 |
| Cord angle (deg.) | 90 | 90 | 90 | 90 | 90 | 90 | 35(cross) |
| **Band layer** | | | | | | | |
| Composition of cord | hybrid (Fig.6) | hybrid (Fig.6) | hybrid(Fig.6) | single (Fig.8a) | single (Fig.8a) | hybrid (Fig.6) | single (Fig.8a) |
| High elasticity filament -Material | *1 | *1 | *1 | ---- | ---- | *1 | ---- |
| -Denier | 1500d | 1500d | 1500d | | | 1000d | |
| Low elasticity filament -Material | nylon | nylon | nylon | nylon | nylon | nylon | nylon |
| -Denier | 840d | 840d | 840d | 840d | 840d | 840d | 2/1260d |
| Type of band ply | spiral | spiral | spiral | cut-end ply | cut-end ply | spiral | cut-end ply |
| Cord angle | 0 | 0 | 3 | 18x18 | 0 | 0 | 21x21 |
| Band width WB (mm) | 160 | 141 | 176 | 160 | 160 | 160 | 160/140 |
| Ratio of band width to tread width WB/WT | 0.90 | 0.80 | 1.00 | 0.90 | 0.90 | 0.90 | ---- |
| overlap width L (mm) | 15 | 15 | 15 | ---- | 15 | 25 | ---- |
| **Bead apex** | | | | | | | |
| Distance J (mm) | 70 | 22 | 66 | 66 | 22 | 44 | hight from bead base 20 |
| Ratio of distance to tread width J/WT | 0.40 | 0.125 | 0.375 | 0.375 | 0.125 | 0.25 | ---- |
| **Test results** | | | | | | | |
| Steering stability (index) | 100 | 100 | 110 | 100 | 100 | 110 | 100 |
| Vibration, ride comfort (index) | 120 | 110 | 120 | 100 | 110 | 110 | 100 |
| High speed durability (index) | 125 | 125 | 125 | 100 | 110 | 95 | 100 |
| Camber stiffness (index) | 98 | 98 | 96 | 65 | 82 | 86 | 100 |
| Vibration initiating speed (km/h) | None up to 240 | None up to 240 | None up to 240 | None up to 210 | None up to 240 | None up to 210 | None up to 170 |

*1......Aromatic polyamide

## Claims

1. A radial tyre for a motorcycle comprising a carcass (6) having a main body (6a) extending from a tread (2) through sidewalls (3) to a bead core (5) in each of two beads (4), and two turned-up parts (6b) each

8

turned around the bead core (5) from the inside to the outside of the tyre and extending outwardly in the tyre radial direction to the tread (2); a band layer (7) composed of at least one band ply disposed outside in the tyre radial direction of the carcass (6) and in the tread (2); two bead apexes (9) each extending from a bead core (5) to the tread (2) and terminated between the main body part (6a) and the band layer (7) and said tread (2) extending in an arc from the tyre equator outwardly in the tyre axial direction so as to define a tread width (WT) which is the tyre maximum width (W) wherein the carcass (6) is composed of at least one carcass ply of carcass cords made of organic fibres inclined at an angle of 85 to 90 deg to the tyre equator (C) characterised in that the band layer (7) comprises a spirally wound narrow strip (10) wound at a small angle of 0 to 5 deg to the tyre equator (C), the strip being a narrow band-shaped ply strip (10) having at least one band cord (11) of twisted high elasticity filament (13) and low elasticity filament (14) in a topping rubber (12) and the distance (J) in the tyre axial direction of the terminated end (K) of the bead apex (9) from the tyre equator (C) is in a range of 0.125 to 0.375 times the tread width (WT).

2. A radial tyre according to claim 1 characterised in that the high elasticity filament (13) is an organic fibre with elastic modulus of 200 g/d or more, and the low elasticity filament (14) is an organic fibre with elastic modulus of 100 g/d or less.

3. A radial tyre according to claim 1 or 2 characterised in that the band cord (11) is formed by twisting one or more high elasticity pre-twisted filaments (13) and one or more low elasticity pre-twisted filaments (14) and the pre-twisting directions are the same to each other and reverse to the twisting direction.

4. A radial tyre according to claim 1, 2 or 3 characterised in that as shown in the stress-elongation curve (c) of the band cord (11), the band cord (11) has a low elasticity region ranging from an origin (O) to a flex point (V) and a high elasticity region beyond the flex point (V), the elongation at said flex point (V) being less than 3%, and a ratio (EH/EL) of the modulus of elasticity in the high elasticity region (EH) to the modulus of elasticity in the low elasticity region (EL) being in the range of 4 to 8.

5. A radial tyre according to claim 1, 2, 3 or 4 characterised in that the upper end of said turned-up part (6b) overlaps the band layer (7) so as to form the overlap portion (16), and the overlap width (L) of the overlap portion (16) on the band layer (7) is 2 to 20mm.

**Patentansprüche**

1. Ein Radialreifen für ein Motorrad mit einer Karkasse (6), die einen Hauptkörper (6a), der sich von einer Lauffläche (2) durch Seitenwände (3) zu einem Wulstkern (5) in jedem von zwei Wülsten (4) erstreckt, und zwei umgeschlagene Teile (6b) aufweist, die jeweils um den Wulstkern (5) von der Innenseite zur Außenseite des Reifens geschlagen sind und sich nach außen in der Reifenradialrichtung zur Lauffläche (2) erstrecken; einer Bandschicht (7), die aus wenigstens einer Bandlage besteht, die außen in der Reifenradialrichtung der Karkasse (6) und in der Lauffläche (2) angeordnet ist; und zwei Wulstkernreitern (9), die sich jeweils von einem Wulstkern (5) zur Lauffläche (2) erstrecken und zwischen dem Hauptkörperteil (6a) und der Bandschicht (7) enden, wobei die Lauffläche (2) sich in einem Bogen vom Reifenäquator nach außen in der Reifenaxialrichtung erstreckt, um eine Laufflächenbreite (WT) zu definieren, welche die maximale Reifenbreite (W) darstellt, worin die Karkasse (6) aus wenigstens einer Karkassenlage von Karkassencorden besteht, die aus organischen Fasern hergestellt sind, welche unter einem Winkel von 85 bis 90 Grad zum Reifenäquator (C) geneigt sind,
**dadurch gekennzeichnet,**
daß die Bandschicht (7) einen spiralförmig gewickelten schmalen Streifen (10) umfaßt, der unter einem kleinen Winkel von 0 bis 5 Grad zum Reifenäquator (C) gewickelt ist, wobei der Streifen einen schmalen bandförmigen Lagenstreifen (10) darstellt, der wenigstens einen Bandcord (11) aus einem Filament (13) hoher Elastizität und einem Filament (14) niedriger Elastizität, die verdreht sind, in einem Obergummi (12) aufweist, und die Entfernung (J) in der Reifenaxialrichtung des zum Abschluß kommenden Endes (K) des Wulstkernreiters (9) vom Reifenäquator (C) in einem Bereich vom 0,125- bis 0,375-fachen der Laufflächenbreite (WT) liegt.

2. Ein Radialreifen nach Anspruch 1,
dadurch gekennzeichnet,

daß das Filament (13) hoher Elastizität eine organische Faser mit einem Elastizitätsmodul von 200 g/d oder mehr und das Filament (14) niedriger Elastizität eine organische Faser mit einem Elastizitätsmodul von 100 g/d oder weniger ist.

3. Ein Radialreifen nach Anspruch 1 oder 2,
dadurch gekennzeichnet,
daß der Bandcord (11) durch Verdrehen eines oder mehrerer vor-verdrehter Filamente (13) hoher Elastizität und eines oder mehrerer vor-verdrehter Filamente (14) niedriger Elastizität gebildet ist, und die Vor-Verdrehungsrichtungen gleich in Bezug auf einander und umgekehrt in Bezug auf die Verdrehungsrichtung sind.

4. Ein Radialreifen nach Anspruch 1, 2 oder 3,
dadurch gekennzeichnet,
daß, wie in der Beanspruchung-Dehnung-Kurve (c) des Bandcords (11) gezeigt, der Bandcord (11) einen Bereich niedriger Elastizität, der sich von einem Ursprung (O) zu einem Wendepunkt (V) erstreckt, und einen Bereich hoher Elastizität jenseits des Wendepunkts (V) aufweist, wobei die Dehnung an dem Wendepunkt (V) weniger als 3% beträgt, und ein Verhältnis (EH/EL) des Elastizitätsmoduls in dem Bereich (EH) hoher Elastizität zum Elastizitätsmodul in dem Bereich (EL) niedriger Elastizität in dem Bereich von 4 bis 8 liegt.

5. Ein Radialreifen nach Anspruch 1, 2, 3 oder 4,
dadurch gekennzeichnet,
daß das obere Ende des umgeschlagenen Teils (6b) die Bandschicht (7) überlappt, um den Überlappabschnitt (16) zu bilden, und die Überlappbreite (L) des Überlappabschnitts (16) auf der Bandschicht (7) 2 bis 20 mm beträgt.

**Revendications**

1. Pneumatique à carcasse radiale pour motocyclette, comprenant une carcasse (6) ayant un corps principal (6a) partant d'une bande de roulement (2) et passant dans des flancs (3) vers une tringle (5) dans chacun de deux talons (4), et deux parties repliées (6b) qui sont pliées chacune autour de la tringle (5) de l'intérieur vers l'extérieur du pneumatique et sont dirigées vers l'extérieur dans la direction radiale du pneumatique vers la bande de roulement (2), une couche (7) de bande composée d'au moins une nappe de bande placée à l'extérieur, en direction radiale du pneumatique, de la carcasse (6) et dans la bande de roulement (2), deux pointes de bourrage (9) de talon partant chacune d'une tringle (5) vers la bande de roulement (2) et se terminant entre la partie principale de corps (6a) et la couche de bande (7), la bande de roulement (2) étant disposée en arc de courbe de l'équateur du pneumatique vers l'extérieur dans la direction axiale du pneumatique afin qu'elle détermine une largeur (WT) de bande de roulement qui correspond à la largeur maximale (W) du pneumatique, la carcasse (6) étant composée d'au moins une nappe de câblés de carcasse formés de fibres organiques inclinée d'un angle compris entre 85 et 90° par rapport à l'équateur (C) du pneumatique, caractérisé en ce que la couche (7) de bande comprend un étroit ruban (10) enroulé en spirale avec un petit angle de 0 à 5° par rapport à l'équateur (C) du pneumatique, le ruban étant un étroit ruban (10) de nappe en forme de bande ayant au moins un câblé (11) de bande d'un filament d'élasticité élevée (13) et d'un filament de faible élasticité (14) qui sont retordus, dans un caoutchouc d'enrobage (12) et la distance (J) mesurée dans la direction axiale du pneumatique de l'extrémité (K) de terminaison de la pointe de bourrage de talon (9) depuis l'équateur (C) est comprise entre 0,125 et 0,375 fois la largeur (WT) de la bande de roulement.

2. Pneumatique à carcasse radiale selon la revendication 1, caractérisé en ce que le filament d'élasticité élevée (13) est une fibre organique ayant un module élastique de 200 g/d ou plus, et le filament de faible élasticité (14) est une fibre organique ayant un module élastique inférieur ou égal à 100 g/d.

3. Pneumatique à carcasse radiale selon la revendication 1 ou 2, caractérisé en ce que le câblé (11) de bande est formé par retordage d'un ou plusieurs filaments préalablement retordus d'élasticité élevée (13) et d'un ou plusieurs filaments préalablement retordus de faible élasticité (14), les sens de torsion préalable étant les mêmes et étant inverses du sens de torsion.

**4.** Pneumatique à carcasse radiale selon la revendication 1, 2 ou 3, caractérisé en ce que, comme l'indique la courbe contrainte-allongement (c) du câblé (11) de bande, ce câblé (11) a une région de faible élasticité comprise entre l'origine (O) et un point de transition (V), et une région d'élasticité élevée placée au-delà du point de transition (V), l'allongement au point de transition (V) étant inférieur à 3 %, le rapport (EH/EL) du module d'élasticité dans la région d'élasticité élevée (EH) au module d'élasticité dans la région de faible élasticité (EL) étant compris entre 4 et 8.

**5.** Pneumatique à carcasse radiale selon la revendication 1, 2, 3 ou 4, caractérisé en ce que l'extrémité supérieure de la partie repliée (6b) recouvre la couche de bande (7) afin qu'elle forme une partie (16) de recouvrement, et la largeur de recouvrement (L) de la partie de recouvrement (16) sur la couche de bande (7) est comprise entre 2 et 20 mm.

# Fig.1

EP 0 467 585 B1

# Fig.2

# Fig.3(a)

# Fig.3(b)

# Fig.4(a)

13A

# Fig.4(b)

13B

# Fig.5

Load (Kg)

Elongation (%)

# Fig.6

# Fig.7

Fig.8(a)

Fig.8(b)